# EUROPEAN PATENT SPECIFICATION

(11) **EP 3 251 402 B1**
(45) Date of publication and mention of the grant of the patent: **26.12.2018**
(21) Application number: 16706067.2
(22) Date of filing: 29.01.2016
(51) Int. Cl.: H04W 24/10, H04W 28/04

(54) **RADIO RESOURCE MANAGEMENT (RRM) REPORTING FOR LICENSED ASSISTED ACCESS (LAA)**
BENACHRICHTIGUNG VON RADIO RESSOURCEN MANAGEMENT (RRM) FÜR LIZENSIERT UNTERSTÜTZTEN ZUGANG (LAA)
RAPPORT DE GESTION DE RESOURCES RADIO (RRM) POUR ACCÈS ASSISTÉ PAR LICENSE (LAA)

(30) Priority: 29.01.2015 US 201562109497 P
(43) Date of publication of application: 06.12.2017
(73) Proprietor: Intel IP Corporation, Santa Clara, CA 95054 (US)
(72) Inventor: HEO, Youn Hyoung, Santa Clara, CA 95054 (US); KWON, Hwan-Joon, Santa Clara, California 95054 (US); ZHANG, Yujian, Beijing Heilongjiang 100081 (CN); HE, Hong, Beijing Heilongjiang 100190 (CN)
(74) Representative: Goddar, Heinz J.
(86) International application number: PCT/US2016/015810
(87) International publication number: WO 2016/123568

(56) References cited:
- WO-A1-2007/066883
- SAMSUNG: "Discussion on CSI measurement aspects for LAA", 3GPP DRAFT; R1-144743 DISCUSSION ON CSI MEASUREMENT ASPECTS FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. San Francisco, USA; 20141117 - 20141121 17 November 2014 (2014-11-17), XP050875821, Retrieved from the Internet: URL:http://www.3gpp.org/ftp/Meetings_3GPP_ SYNC/RAN1/Docs/ [retrieved on 2014-11-17]
- SAMSUNG: "Discussion on carrier selection for LAA", 3GPP DRAFT; R1-144740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050875818, Retrieved from the Internet: URL:http://www.3gpp.org/ftp/Meetings_3GPP_ SYNC/RAN1/Docs/ [retrieved on 2014-11-17]
- NOKIA (EDITOR): "List of test cases/scenarios proposal for 3G LTE Terminal Protocol Conformance Test Specifications - RRC part 3 (Measurement Configuration Control and Reporting)", 3GPP DRAFT; R5-082059 RRC PART 3 TEST LIST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Paris, France; 20080624 - 20080626, 27 June 2008 (2008-06-27), XP050616371,
- "3rd Generation Partnership Project; Technical Specification Group Radio Access Network; Study on Licensed-Assisted Access to Unlicensed Spectrum; (Release 13)", 3GPP DRAFT; TR 36 889 V0.0.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 November 2014 (2014-11-24), XP050919779, Retrieved from the Internet: URL:http://www.3gpp.org/ftp/tsg_ran/WG1_RL 1/TSGR1_79/Docs/ [retrieved on 2014-11-24]

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3 GPP) long term evolution (LTE), the Institute of Electrical and Electronics Engineers (IEEE) 1202.16 standard (e.g., 1202.16e, 1202.16m), which is commonly known to industry groups as WiMAX (Worldwide interoperability for Microwave Access), and the IEEE 1202.11 standard, which is commonly known to industry groups as WiFi.

In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

3GPP Tdoc. RI-144743, "Discussion on CSI measurement aspects for LAA", 3GPP TSG RAN WG1 #79, November 2014, discuss implications of functionalities on the physical layer required for LAA, specifically the design and potential enhancements of CSI measurement and feedback. Tdoc. R1-144743 states that the LAA CSI framework should support UE measurements capturing different network states on a given LAA carrier and that enhancements to CSI measurement triggering and reporting conditions to reflect the opportunistic channel access and dynamic interference should be further studied for LAA.

3GPP Tdoc. RI-144740, "Discussion on carrier selection for LAA", 3GPP TSG RAN WG1 #79, November 2014, focuses on carrier selection in LAA and suggests a signaling/procedure for carrier selection. Issues related to interference measurement to support carrier selection are discussed.

### SUMMARY

The invention is defined by the subject matter of the independent claims. Advantageous embodiments are subject to the dependent claims.

The embodiments and/or examples in the following description which are not covered by he appended claims are considered as not being part of the present invention.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG 1 illustrates a system for Licensed Assisted Access (LAA) that includes a licensed carrier and one or more unlicensed carriers used for carrier aggregation in accordance with an example;
FIGS. 2A-2C illustrate measurement reporting for selected cells utilized for Licensed Assisted Access (LAA) in accordance with an example;
FIG 3 illustrates measurement reporting for selected cells utilized for Licensed Assisted Access (LAA) based on a triggering event in accordance with an example;
FIG. 4 illustrates signaling to configure measurement reporting and layer 3 (L3) filtering at a user equipment (UE) in accordance with an example;
FIGS. 5A-5B illustrate signaling for physical cell identity (PCI) collision avoidance in Licensed-Assisted Access (LAA) in accordance with an example;
FIG. 6 depicts functionality of a user equipment (UE) operable to perform measurement reporting for selected cells used in Licensed-Assisted Access (LAA) in accordance with an example;
FIG 7 depicts a flowchart of a machine readable storage medium having instructions embodied thereon for performing measurement reporting for selected cells used in Licensed-Assisted Access (LAA) at a user equipment (UE) in accordance with an example;
FIG. 8 depicts functionality of a user equipment (UE) operable to assist a serving eNodeB with physical cell identity (PCI) collision avoidance in Licensed-Assisted Access (LAA) in accordance with an example;
FIG. 9 depicts functionality of a user equipment (UE) operable to perform measurement reporting for selected cells used in Licensed-Assisted Access (LAA) in accordance with an example;
FIG 10 illustrates a diagram of a wireless device (e.g., UE) in accordance with an example; and
FIG 11 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

The conventional 3GPP LTE system utilizes spectrum that is exclusively assigned to corresponding LTE service providers (or operators), and this spectrum is referred to as LTE in Licensed Spectrum (or simply LTE). However, due to an upsurge in demand for wireless broadband data, increasing the data throughput in the 3GPP LTE system is desirable. In one solution, data can be transmitted through an unlicensed spectrum in addition to the licensed spectrum. The 3GPP LTE system operating in the unlicensed spectrum can be referred to as LTE in Unlicensed Spectrum (or LTE-U). A system integrating LTE and LTE-U using carrier aggregation (CA) technology is referred to as Licensed-Assisted Access (LAA) using LTE, or simply LAA. In LAA, an LTE licensed carrier serves as a primary cell (PCell) and one or multiple LTE-U carriers serve as secondary cell(s) or SCell(s). In other words, the LTE-U carriers are used as secondary cells to offload the data in LTE as part of carrier aggregation.

In contrast to LTE, LTE-U shares the medium (or spectrum) with other radio access technologies (RATs), such as IEEE 802.11x (WiFi) or the same RAT (i.e., LTE-U) deployed by other operators. When multiple LTE operators share the same medium (or spectrum), the UE may detect cell-specific reference signals (CRS) transmitted from multiple LTE operators on the same frequency carrier, which can cause additional overhead if the UE performs measurements and sends measurement reporting based on any detected cell. Although some of these detected cells can have a good channel quality for the UE, these detected cells cannot be configured as secondary cells if the detected cells belong to a different eNodeB or different LTE operators.

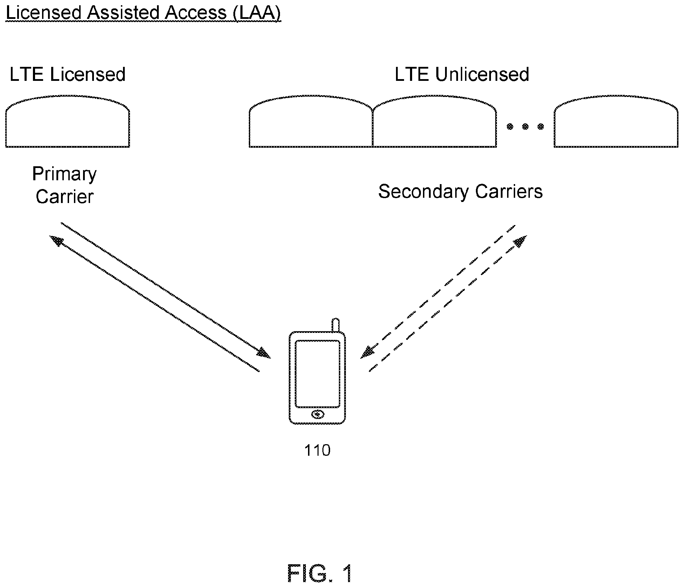

FIG 1 illustrates an exemplary system for Licensed Assisted Access (LAA) that includes a licensed carrier and one or more unlicensed carriers used for carrier aggregation. The licensed carrier and the one or more unlicensed carriers can be utilized by a user equipment (UE) 110 for carrier aggregation. The licensed carrier can be referred to as a primary carrier, and the licensed carrier can serve as a primary cell (PCell). The unlicensed carriers can be referred to as secondary carriers, and the unlicensed carriers can serve as secondary cells (SCells). As an example, the unlicensed carriers can utilize a non-LTE RAT, such as IEEE 802.11x (WiFi). Alternatively, the unlicensed carriers can be associated with a different operator as compared to the licensed carrier.

In previous solutions, the UE 110 can perform measurements to determine the channel quality for a serving cell and one or more neighboring cells. In the present technology, the UE 110 can measure the channel quality for the unlicensed carriers (or LTE-U carriers), and then report the measurements to a serving eNodeB. These measurements performed by the UE 110 for the LTE-U carrier can include Iₒₜₕₑᵣ, which indicates an average received power (except for LAA bursts from the serving eNodeB). Here, a desired signal may not be distinguished from an undesired signal since the UE 110 measures non-LAA bursts. A non-LAA burst refers to a time period in which the channel (unlicensed carrier) is idle or used by other RATs/ operators/eNodeBs. In addition, these measurements performed by the UE 110 for the LTE-U carrier can include P_{busy}, which indicates a time portion that the LTE-U carrier is "busy" (i.e., when a received power is larger than a threshold). This time portion measurement may or may not include the LAA bursts from the serving SCell (or LTE-U carrier). The "time portion of busy portion" measurement (P_{busy}) is a new measurement quantity for LAA Received Signal Strength Indicator (RSSI) measurements. In general, the Iₒₜₕₑᵣ and P_{busy} measurements aim to measure an interference level and characteristic at the UE 110, and the Iₒₜₕₑᵣ and P_{busy} measurements enable the UE 110 to determine whether these unlicensed carriers (or LTE-U carriers) are suitable for LTE operation. Although the eNodeB can also sense the carrier for Listen Before Talk (LBT), there is a hidden node that the eNodeB cannot detect but the UE 110 experiences. In this case, the UE-based interference measurement reporting can be beneficial.

In one example, the UE 110 can perform various measurements and report the measurements for radio resource management (RRM) purposes. For example, measurement reporting can be used for radio resource control, admission control, mobility (handover) or interference control. The measurements can include a channel quality based reference signal (RS), such as a common reference signal (CRS) or a discovery reference signal (DRS). The UE 110 can periodically send the measurement reports, or the measurement reporting can be event triggered. The eNodeB can configure the measurement objects, as well as how or when the measurement reporting is performed by the UE 110.

As described in greater detail below, a user equipment (UE) can perform measurements and/or perform measurement reporting when the UE detects cells (associated with LTE-U carriers) associated with a same eNodeB or a same operator (e.g., a same public land mobility network, or PLMN). The measurements can include, but are not limited to, Iₒₜₕₑᵣ and P_{busy}. The measurement reporting can be transmitted periodically, but this manner of measurement reporting can be less efficient from the perspective of UE power consumption because the UE would send measurement reporting even when there is no interference problem.

In a first solution, the UE can perform selective measurement reporting (i.e., the UE can only report measurements for desired cells). The desired cells can be added as secondary cells, and the desired cells can belong to a same operator having a same PLMN. The measurement reporting of selective cells is in contrast to previous LTE solutions, in which the UE is configured to report measurements for all detected serving cells. In a second solution, new measurement reporting events can efficiently send interference measurement reporting for LAA operation. Previous event triggers cannot be reused for measurement reporting for the LTE-U carriers. In a third solution, new procedures/signaling can be utilized for physical cell identity (PCI) collision avoidance. PCI collision reporting is a new measurement reporting for LAA cells. PCI collision on the same frequency is a new problem in LAA due to the fact that multiple operators can share the same frequency without coordination.

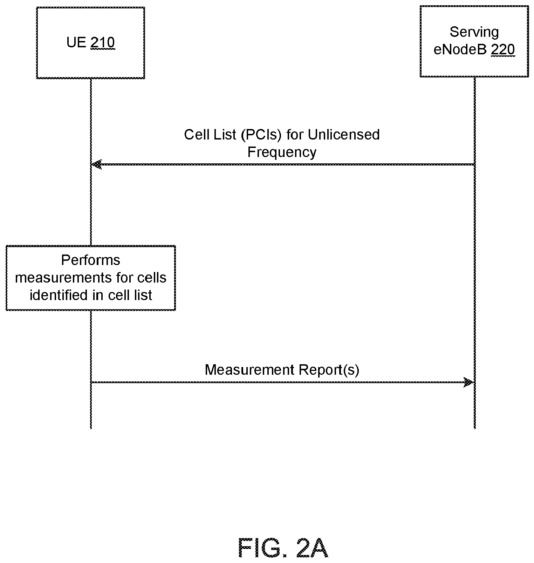

In one configuration, a user equipment (UE) can perform and/or report measurements for selective cells (or unlicensed carriers) used in LAA, as further discussed in FIGS. 2A-2C. In LAA, secondary cells (unlicensed carriers) are only added when the detected cell is associated to a serving eNodeB or a serving operator. In other words, cells associated with different eNodeBs or different operators (i.e., different PLMNs) cannot be added as secondary cells for the UE. In one example, the UE can detect a plurality of cells. Each of the cells can be associated with various eNodeBs, operators and/or PLMNs. The cells can be associated with unlicensed carriers, and the cells can be configured for use in LAA. The UE can select a subset of cells from the plurality of cells, wherein each of the cells in the subset are associated with the same serving eNodeB, operator and/or PLMN. The serving eNodeB can also be referred to as a common serving eNodeB. In other words, the UE may not select cells associated with different eNodeBs, operators and/or PLMNs because these cells cannot be utilized by the UE for LAA. As discussed in greater detail below, the UE can determine the subset based on a cell list or various other mechanisms. The UE can perform measurement reporting for the subset of cells. More specifically, the UE can send measurement reports for each of the cells in the subset to the serving eNodeB. The measurement reports can include, for each cell, values for Iₒₜₕₑᵣ, P_{busy}, etc. As a result, the UE can send measurement reports for cells that can possible serve as secondary cells to the UE, and the UE does not send measurement reports for cells that are associated with different eNodeBs, operators and/or PLMNs.

FIG. 2A illustrates measurement reporting for selected cells utilized for Licensed Assisted Access (LAA). A serving eNodeB 220 can provide a cell list for an unlicensed frequency to a user equipment (UE) 210, and the UE 210 can perform and/or report measurements accordingly. For example, the serving eNodeB 220 can configure the cell list to include a list of physical cell identities (PCIs), and the PCIs can be associated to the serving eNodeB 220 for each configured measurement object for the unlicensed frequency. In other words, the PCIs on the list can be cells that operate on the unlicensed frequency and are only associated with the serving eNodeB 220. The UE 210 can perform and/or report measurements for the PCIs on the cell list (which are only on the unlicensed frequency and are associated with the serving eNodeB 220). Therefore, the cell list may not include cells that are associated with other eNodeBs, operators and/or PLMNs. In addition, the serving eNodeB 220 can configure whether the UE 210 performs measurements on the PCIs included in the cell list exclusively, or whether the UE 210 is allowed to detect other cells. As a result, the UE 210 can selectively perform and/or report measurements for selected cells utilized for LAA, while selectively ignoring other cells belonging to other eNodeBs, operators and/or PLMNs.

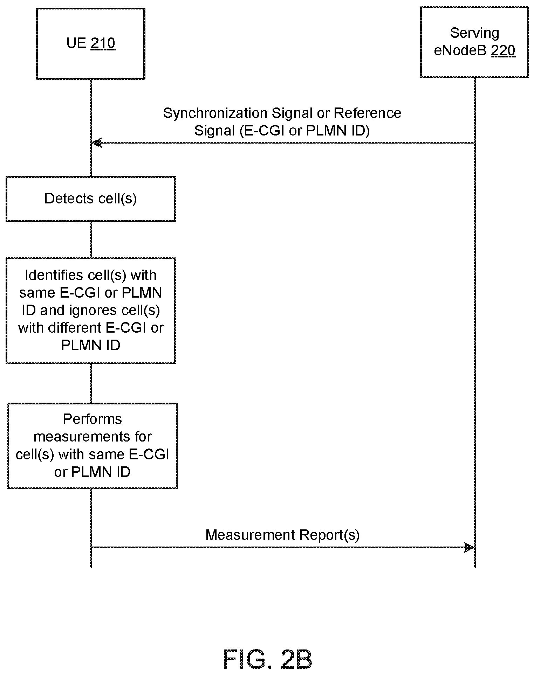

FIG. 2B illustrates measurement reporting for selected cells utilized for Licensed Assisted Access (LAA). A user equipment (UE) can measure cells operating in an unlicensed frequency and associated with a same serving eNodeB 220 (or a same operator or PLMN) during a cell search procedure. In one example, the UE 210 can receive a synchronization signal or reference signal from the serving eNodeB 220. The synchronization signal or reference signal can include an E-UTRAN Cell Global Identifier (E-CGI) or PLMN ID associated with the serving eNodeB 220. For example, the serving eNodeB 220 can send associated eNodeB information or PLMN information along with the synchronization signal or reference signal, which enables the UE 210 to determine the E-CGI or PLMN ID associated with the serving eNodeB 220. In another example, a discovery reference signal (DRS) sequence can be masked with an eNodeB ID or PLMN ID, or broadcast information transmitted with the DRS sequence can be acquired at the UE 210.

In one example, the UE 210 can detect a plurality of cells. Each of the cells can be associated with various eNodeBs, operators and/or PLMNs. The cells can be associated with unlicensed carriers, and the cells can be configured for use in LAA. For each of the cells, the UE 210 can determine the E-CGI or PLMN ID associated with the cells. When the UE 210 performs the cell search procedure or performs reference signal measurements, the UE 210 can detect the cells and determine the E-CGI or PLMN ID associated with the cells. If the UE 210 detects a cell that has a different E-CGI or PLMN ID as compared to the serving eNodeB 220, the UE 210 knows that this cell cannot be utilized for LAA (since the cell is associated with a different eNodeB, operator and/or PLMN). In this case, the UE 210 can ignore the cell and does not perform and/or report measurements for the cell. Rather, the UE 210 can only perform and/or report measurements for cells that share the same E-CGI or PLMN ID as compared to the serving eNodeB 220.

In an alternative configuration, the UE 210 can perform measurements for detected cells (irrespective of whether the detected cells are associated with the same eNodeB, operator or PLMN), but measurement reporting is not triggered for cells that do not share the same E-CGI or PLMN ID as compared to the serving eNodeB 220. However, the UE 210 can include measurement results of these cells if a measurement event is triggered by another cell which is associated to the serving eNodeB 220.

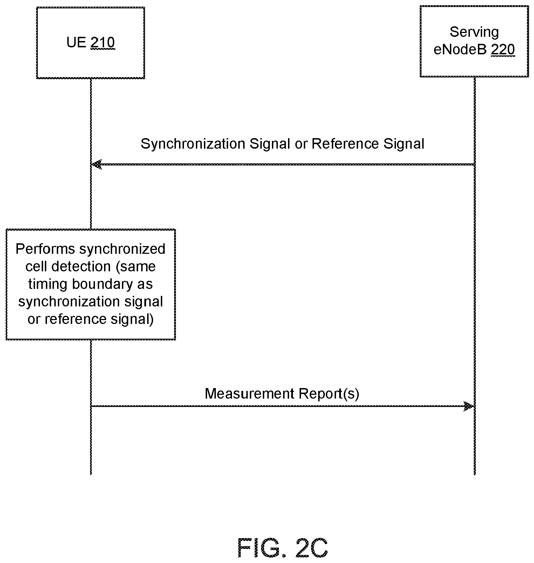

FIG. 2C illustrates measurement reporting for selected cells utilized for Licensed Assisted Access (LAA). A user equipment (UE) 210 can perform and/or report measurements for cells that are synchronized with a primary cell (PCell) operating in a licensed frequency or a secondary cell (SCell) operating in the licensed frequency. Since carrier aggregation is used for LAA operation, a subframe boundary and radio frame boundary are aligned from the transmitter side. In other words, a timing boundary is synchronized because all the cells belong to the same serving eNodeB 220 (or PLMN or operator). In a co-located case, the UE 210 can receive synchronized signals from an unlicensed carrier and a licensed carrier.

In one example, since the timing boundaries among the cells belonging to the same serving eNodeB 220 are synchronized, neighboring cells that belong to other neighboring eNodeBs (e.g., different operators or PLMNs) are likely not synchronized to the serving eNodeB 220. Therefore, when the UE 210 detects cells via reference signals, the UE 210 identify cells that have the same timing boundary as the primary cell (or serving eNodeB 220) and ignore cells that do not have the same timing boundary (since these cells are presumably associated with a different eNodeB, operator and/or PLMN). The UE 210 can perform and/or report measurements for the cells that share the same serving eNodeB 220 (as indicated by the timing boundary associated with the cells), and the UE 210 may not perform and/or report measurements for the cells that have a different timing boundary as compared to the serving eNodeB 220.

In other words, the UE 210 can perform a synchronized cell detection. The UE 210 can receive a synchronization signal or reference signal from the serving eNodeB 220. The synchronization signal or reference signal can be associated with a particular timing boundary. For carrier aggregation in LAA, all cells associated with the serving eNodeB 220 can have the same timing boundary as compared to the serving eNodeB 220. During the synchronized cell detection, the UE 210 can receive synchronization signals and reference signals in the same timing boundary as compared to the serving eNodeB 220. As a result, the UE 210 can detect the cells associated with the serving eNodeB 220 in the unlicensed carrier. The UE 210 can perform measurement reporting for only the cells that share the same timing boundary as compared to the serving eNodeB 220 (i.e., the UE 210 does not perform measurement reporting for detected cells that do not share the same timing boundary as compared to the serving eNodeB 220).

In one example, in a non-colocated case, a propagation delay difference can occur between the licensed carrier and the unlicensed carrier, and therefore, the synchronization can be extended up to 32 micro seconds (us). In another example, with respect to synchronized cell detection, the UE can perform synchronized cell detection only for unlicensed frequencies. In addition, the eNodeB can configure whether or not the UE only performs synchronized cell detection. Furthermore, the eNodeB can inform whether it is colocated or non-colocated, e.g., by indicating whether a reception timing window is to be perfectly aligned or different up to 32 us. Such a configuration can be achieved using signaling in system information, or transmitted via dedicated signaling to the UE (e.g., RRC signaling for measurement configuration).

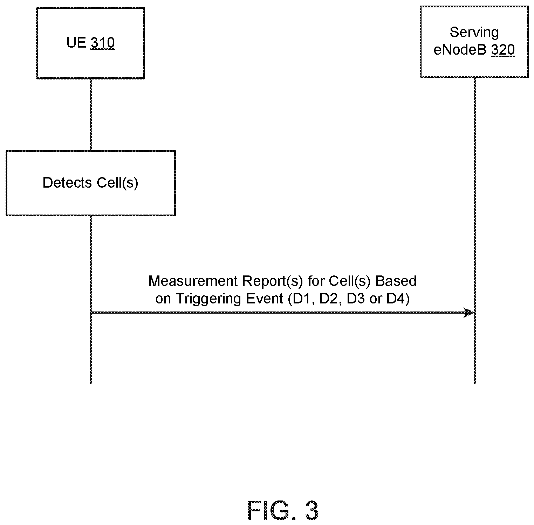

FIG 3 illustrates exemplary measurement reporting for selected cells utilized for Licensed Assisted Access (LAA) based on a triggering event. A user equipment (UE) 310 can detect a plurality of cells. Each of the cells can be associated with various eNodeBs, operators and/or PLMNs. The cells can be associated with unlicensed carriers, and the cells can be configured for use in LAA. The UE can select a subset of cells from the plurality of cells, wherein each of the cells in the subset are associated with a same serving eNodeB 310 (or a same operator and/or PLMN). The serving eNodeB 320 can also be referred to as a common serving eNodeB. In other words, the UE 310 may not select cells associated with different eNodeBs, operators and/or PLMNs because these cells cannot be utilized by the UE 310 for LAA.

In one example, based on various triggering events (D1, D2, D3 or D4), the UE 310 can perform and/or report measurements for a particular cell in the subset to the serving eNodeB 320. The measurement report can include, for the cell, an average received power except LAA bursts from the common serving eNodeB (Iₒₜₕₑᵣ), and a time portion during which a received power is greater than a defined threshold (P_{busy}). As previously explained, the Iₒₜₕₑᵣ and P_{busy} measurements aim to measure an interference level and characteristic at the UE 110, and the Iₒₜₕₑᵣ and P_{busy} measurements enable the UE 110 to determine whether these unlicensed carriers (or LTE-U carriers) are suitable for LTE operation. These new measurement reporting triggering events can function to efficiently send interference measurement reports with respect to LAA operation.

In one example, the measurement reporting can be performed at the UE 310 in response to a first triggering event (D1), which occurs when an average received power for the cell in a non-LAA burst is greater than a defined threshold. The non-LAA burst can indicate a time period during which an unlicensed carrier associated with the cell is idle or utilized by another radio access technology (RAT), operator or eNodeB. In one example, the UE 310 can consider an entering condition for event D1 to be satisfied when condition D1-1 is fulfilled and the UE 310 can consider a leaving condition for event D1 to be satisfied when condition D1-2 is fulfilled, wherein condition D1-1 (entering condition) is represented as Mcr + Ocr - Hys > Thres and condition D1-2 (leaving condition) is represented as Mcr + Ocr - Hys < Thres, wherein Mcr is a measurement result in a non-LAA burst (not taking into account any offsets), Ocr is a frequency specific offset and set to zero if not configured for a CSI-RS resource, Hys is a hysteresis parameter for event D1 (i.e., a hysteresis as defined within reportConfigEUTRA for event D1), and Thresh is a threshold parameter for event D1 (i.e., d1-Threshold as defined within reportConfigEUTRA for event D1), wherein Mcr, Thresh are expressed in dBm and Ocr, Hys are expressed in dB.

In one example, the measurement reporting can be performed at the UE 310 in response to a second triggering event (D2), which occurs when an average received power for the cell except an LAA burst is greater than a received power for the serving eNodeB 320. In one example, the UE 310 can consider an entering condition for event D2 to be satisfied when condition D2-1 is fulfilled and the UE 310 can consider a leaving condition for event D2 to be satisfied when condition D2-2 is fulfilled, wherein condition D2-1 (entering condition) is represented as Mcr + Ocr - Hys > Ms and condition D2-2 (leaving condition) is represented as Mcr + Ocr - Hys < Ms, wherein Mcr is a measurement result in a non-LAA burst (not taking into account any offsets), Ms is a measurement result of the serving cell (not taking into account any offsets), Ocr is a frequency specific offset and set to zero if not configured for the non-LAA burst, Hys is a hysteresis parameter for event D2 (i.e., a hysteresis as defined within reportConfigEUTRA for event D2), Thresh is a threshold parameter for event D2 (i.e., d2-Threshold as defined within reportConfigEUTRA for event D2), wherein Mcr, Thresh are expressed in dBm and Ocr, Hys are expressed in dB.

In one example, the measurement reporting can be performed at the UE 310 in response to a third triggering event (D3), which occurs when a portion of time associated with the cell is greater than a defined threshold, wherein the portion of time represents a time period for which a received power at the cell is greater than a defined threshold. In one example, the UE 310 can consider an entering condition for event D3 to be satisfied when condition D3-1 is fulfilled and the UE 310 can consider a leaving condition for event D3 to be satisfied when condition D3-2 is fulfilled, wherein condition D3-1 (entering condition) is represented as Mcr + Ocr - Hys > Thres and condition D3-2 (leaving condition) is represented as Mcr + Ocr - Hys < Thres, wherein Mcr is a measurement result of a time portion (not taking into account any offsets), Ocr is a frequency specific offset and set to zero if not configured for a CSI-RS resource, Hys is a hysteresis parameter for event D3 (i.e., a hysteresis as defined within reportConfigEUTRA for event D3), and Thresh is a threshold parameter for event D3 (i.e., d3-Threshold as defined within reportConfigEUTRA for event D3), wherein Mcr, Thresh are expressed in dBm and Ocr, Hys are expressed in dB.

In one example, the measurement reporting can be performed at the UE 310 in response to a fourth triggering event (D4), which occurs when a portion of time associated with the cell is greater than or less than a defined value by a defined threshold, wherein the portion of time represents a time period for which a received power at the cell is greater than a defined threshold. In other words, the fourth triggering event (D4) can occur when the portion of time is larger/smaller than a previous measurement reporting by a defined threshold. For example, the UE 310 can trigger measurement reporting when a time portion is larger or smaller than a previous reporting by the defined threshold. The defined threshold can be determined in the specification, or the serving eNodeB 320 can configure the defined threshold as part of a measurement configuration.

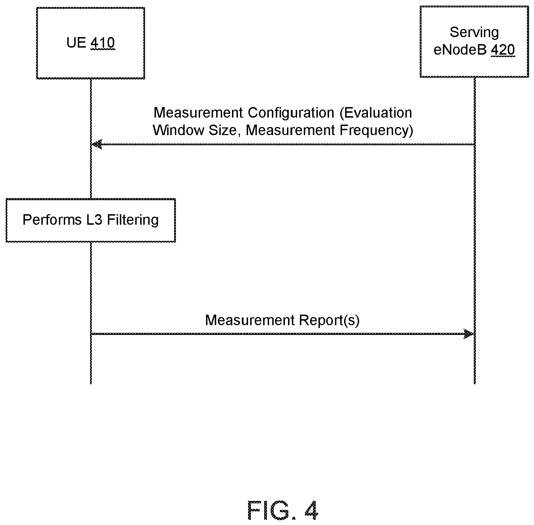

FIG. 4 illustrates exemplary signaling to configure measurement reporting and layer 3 (L3) filtering at a user equipment (UE) 410. A serving eNodeB 420 can send a measurement configuration to the UE 410. The measurement configuration can indicate how long (i.e., an evaluation window size) and/or how frequently the UE 410 is to evaluate a busy/non-busy time portion in order to generate a time portion measurement (P_{busy}) for a particular cell. In other words, based on the measurement configuration received from the serving eNodeB 420, the UE 410 can perform and/or report measurements for cells (e.g., time portion measurements).

In one example, the UE 410 may or may not apply L3 filtering to achieve improved measurement accuracy. The UE 410 can apply or not apply L3 filtering for various measurements of cells, such as a time portion measurement (P_{busy}). Since a time portion value is measured over a certain time period for a particular cell, the UE 410 may not apply L3 filtering. In one example, although L3 filtering can be configured by the serving eNodeB 420, the UE 410 can skip L3 filtering for the time portion measurement (P_{busy}). In another example, the UE 410 can use a different L3 filtering value. For example, the serving eNodeB 420 can configure a different value of L3 filtering for the time portion measurement (P_{busy}).

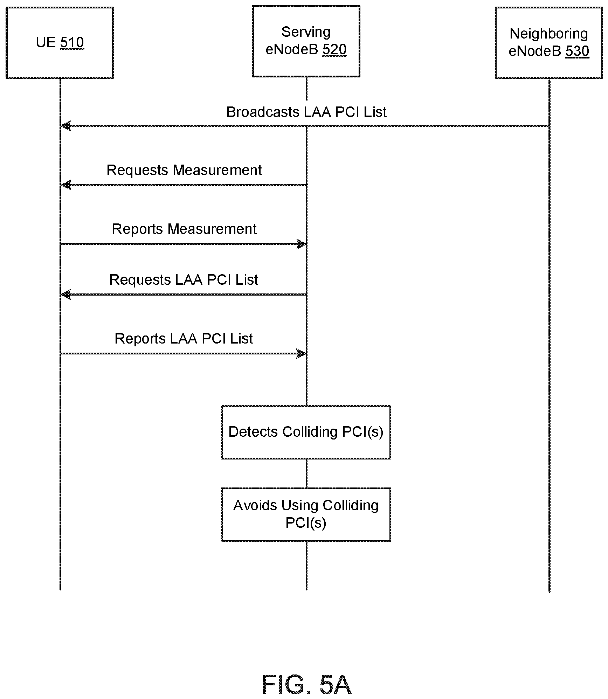

FIG 5A illustrates signaling for physical cell identity (PCI) collision avoidance in Licensed-Assisted Access (LAA). In past solutions, a user equipment (UE) only detects a physical cell identity (PCI) during a cell search procedure and a radio resource management (RRM) measurement. However, if a different eNodeB or a different operator uses a same PCI, the eNodeB can add a secondary cell (SCell) that is actually different from the cell detected by the UE. Therefore, in the present technology, in order to avoid a false SCell addition due to a PCI collision (i.e., when two eNodeBs utilize the same PCI), PCI collision avoidance can be implemented at the UE and the eNodeB.

As shown in FIG 5A, PCI collision avoidance can be performed based on a reading of LAA PCI information from an eNodeB. For example, a neighboring eNodeB 530 (eNB A) can broadcast an LAA PCI list via frequency A. The LAA PCI list can be part of system information that is broadcast from the neighboring eNodeB 530. The neighboring eNodeB 530 can also be referred to as a different eNodeB (i.e., a non-serving eNodeB with respect to the UE 510). The LAA PCI list can include PCIs used in an unlicensed carrier supported by the neighboring eNodeB 530 (eNB_A). The LAA PCI list can be configured per public land mobile network (PLMN) if a radio access network (RAN) is shared by multiple operators. A serving eNodeB 520 (eNB_B) that operates in frequency B can request the UE 510 to measure frequency A if the UE 510 supports both frequency A and frequency B. If the UE 510 detects a cell in frequency A, the UE 510 can send a measurement report to the serving eNodeB520 (eNB_B). The serving eNodeB 520 (eNB B) can request the UE 510 to acquire system information from the neighboring eNodeB 530 (eNB_A). Based on the system information broadcast from the neighboring eNodeB 530 (eNB_A), the UE 510 can obtain the LAA PCI list associated with the neighboring eNodeB 530 (eNB_A). The UE 510 can report the LAA PCI list to the serving eNodeB 520 (eNB_B). Based on the LAA PCI list associated with the neighboring eNodeB 530 (eNB_A), the serving eNodeB 520 can determine whether the neighboring eNodeB 530 (eNB_A) utilizes a same PCI as compared to the serving eNodeB 520 (eNB_A), and if so, the serving eNodeB 520 (eNB_A) can stop using the same PCI in order to avoid a PCI collision.

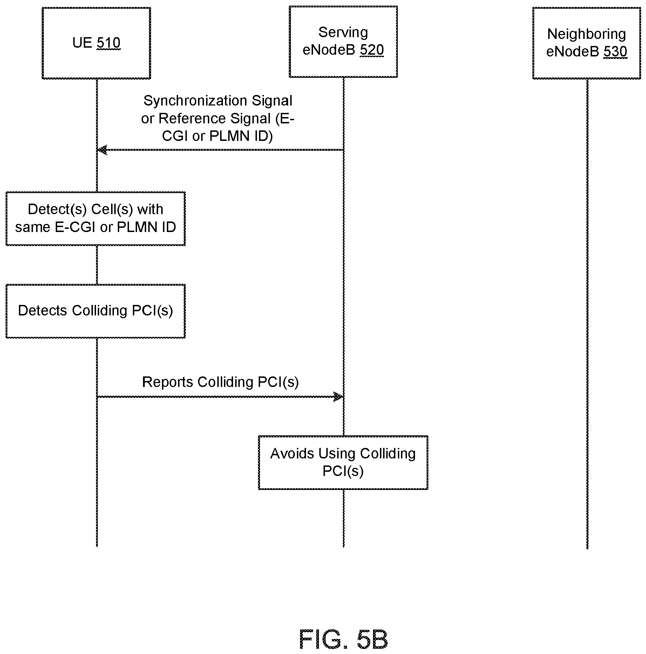

FIG 5B illustrates signaling for physical cell identity (PCI) collision avoidance in Licensed-Assisted Access (LAA). In order to avoid potential PCI collisions at a serving eNodeB 520, a user equipment (UE) 510 can report to the serving eNodeB 520 when a same PCI is being utilized at a different eNodeB, such as a neighboring eNodeB 530, or a different public land mobility network (PLMN). For example, the serving eNodeB 520 can send a synchronization signal or reference signal to the UE 510. The synchronization signal or reference signal can include an E-UTRAN Cell Global Identifier (E-CGI) or PLMN ID associated with the serving eNodeB 520. For example, the serving eNodeB 520 can send associated eNodeB information or PLMN information along with the synchronization signal or reference signal, which enables the UE 510 to determine the E-CGI or PLMN ID associated with the serving eNodeB 520.

In one example, the UE 510 can perform a cell search procedure and/or reference signal (RS) measurement procedure, during which the UE 510 can detect a plurality of cells. Each of the cells can be associated with various eNodeBs, operators and/or PLMNs. The cells can be associated with unlicensed carriers, and the cells can be configured for use in LAA. As an example, the UE 510 can detect cells associated with the serving eNodeB 520, as well as cells associated with the neighboring eNodeB 530.

During the cell search procedure and/or RS measurement procedure, the UE 510 can identify an E-CGI or PLMN ID associated with each detected cell. In other words, synchronization signals and/or reference signals transmitted from the cells can indicate the E-CGI or PLMN ID associated with each detected cell. For each detected cell, the UE 510 can compare the E-CGI or PLMN ID associated with the detected cell (as provided by the synchronization signal and/or reference signal) with the E-CGI or PLMN associated with the serving eNodeB 520, and based on the comparison, the UE 510 can determine whether the detected cell is associated with the serving eNodeB 520 or a different eNodeB, such as the neighboring eNodeB 530. In other words, the UE 510 can determine whether the detected cell belongs to the same serving eNodeB or a different eNodeB based on the E-CGI or PLMN ID associated with the detected cell in relation to the E-CGI or PLMN ID associated with the serving eNodeB 520. When the detected cell shares the same E-CGI or PLMN ID as compared to the serving eNodeB 520, the detected cell is associated with the serving eNodeB 520. Similarly, when the detected cell has a different E-CGI or PLMN ID as compared to the serving eNodeB 520, the detected cell is not associated with the serving eNodeB 520.

In one example, after identifying detected cells that are associated with a different eNodeB, such as the neighboring eNodeB 530, the UE 510 can identify PCIs associated with the detected cells. Furthermore, the UE 510 can detect if one or more PCIs associated with the detected cells are also being utilized by the serving eNodeB 520. In other words, the UE 520 can detect if a same PCI is being utilized by both the serving eNodeB 520 and another eNodeB, such as the neighboring eNodeB 530. If the UE 510 detects a PCI collision, the UE 510 indicates the PCI collision to the serving eNodeB 520, and the serving eNodeB 520 stops using the same PCI in order to avoid a potential PCI collision.

In one example, the PCI collision can be detected when a detected PCI is associated to a different eNodeB, but a same PCI is listed in an LAA PCI list provided by the serving eNodeB 520. In another example, the PCI collision can be detected when the UE 510 detects two same PCIs, but a first same PCI is from the serving eNodeB 520 and a second same PCI is from a different eNodeB/PLMN, such as the neighboring eNodeB 530.

In an alternative configuration to indicate a PCI collision, the UE 510 can trigger measurement reporting on a corresponding frequency, which can include a detected PCI and a detected E-CGI or PLMN ID. In one example, a radio resource control (RRC) signaling message can indicate the PCI collision. The RRC signaling message can include more detailed information, such as the detected PCI and the detected E-CGI or PLMN ID. In yet another example, when the serving eNodeB 520 receives the PCI collision indication, the serving eNodeB 520 can avoid using the colliding PCI by eNodeB implementation.

In one example, a proximity indication can be implemented for LAA. An eNodeB can provide a list of supported frequency carriers for LAA to the UE. The UE can send a proximity indicator to the eNodeB when the UE can detect a proximity to an unlicensed cell's coverage in one of the frequencies included in the list of supported frequency carriers for LAA.

In one configuration, a user equipment (UE) can perform measurements for a detected cell (unlicensed carrier) associated to a serving cell. The UE can receive a physical cell identity list for the unlicensed carrier. The UE can detect a cell corresponding to physical cell identity list. The UE can determine whether a detected cell (unlicensed carrier) is associated with the serving eNB. The UE can receive E-CGI information or PLMN information during a cell search and detection phase. The UE can receive a synchronization signal and reference signal in a symbol and in a subframe in which the UE receives a synchronization signal and reference signal from a licensed carrier.

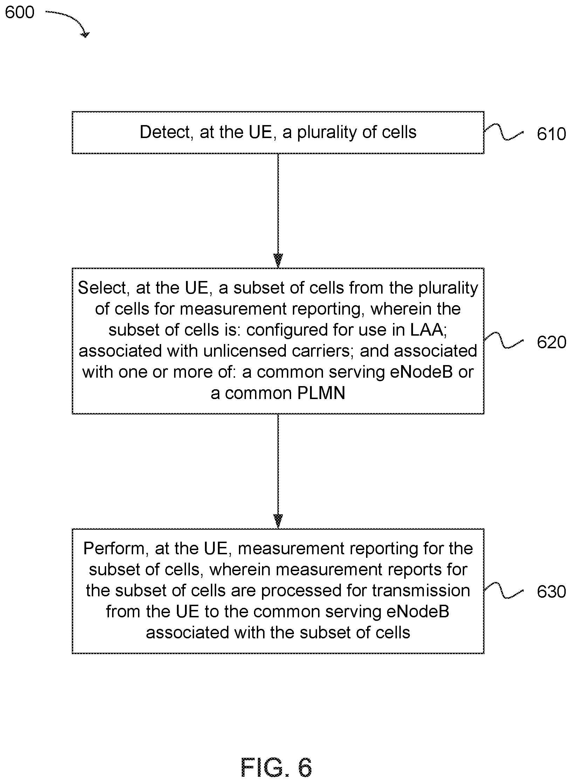

FIG. 6 provides functionality 600 of a user equipment (UE) operable to perform measurement reporting for selected cells used in Licensed-Assisted Access (LAA), as shown in the flow chart in FIG 6. The UE can comprise one or more processors and memory configured to: detect, at the UE, a plurality of cells, as in block 610. The UE can comprise one or more processors and memory configured to: select, at the UE, a subset of cells from the plurality of cells for measurement reporting, wherein the subset of cells is: configured for use in LAA; associated with unlicensed carriers; and associated with one or more of: a common serving eNodeB or a common PLMN, as in block 620. The UE can comprise one or more processors and memory configured to: perform, at the UE, measurement reporting for the subset of cells, wherein measurement reports for the subset of cells are processed for transmission from the UE to the common serving eNodeB associated with the subset of cells, as in block 630.

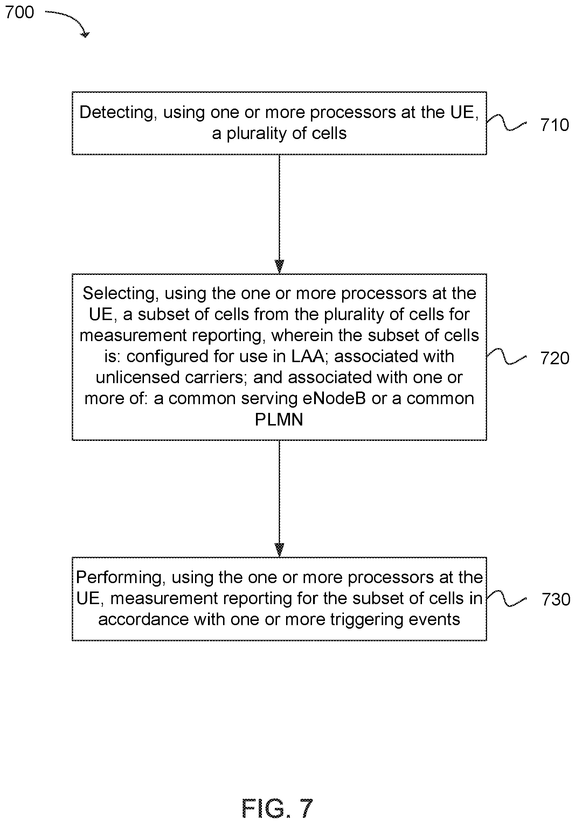

Another example provides at least one machine readable storage medium having instructions 700 embodied thereon for performing measurement reporting for selected cells used in Licensed-Assisted Access (LAA) at a user equipment (UE), as shown in the flow chart in FIG 7. The instructions can be executed on a machine, where the instructions are included on at least one computer readable medium or one non-transitory machine readable storage medium. The instructions when executed perform: detecting, using one or more processors at the UE, a plurality of cells, as in block 710. The instructions when executed perform: selecting, using the one or more processors at the UE, a subset of cells from the plurality of cells for measurement reporting, wherein the subset of cells is: configured for use in LAA; associated with unlicensed carriers; and associated with one or more of: a common serving eNodeB or a common PLMN, as in block 720. The instructions when executed perform: performing, using the one or more processors at the UE, measurement reporting for the subset of cells in accordance with one or more triggering events, as in block 730.

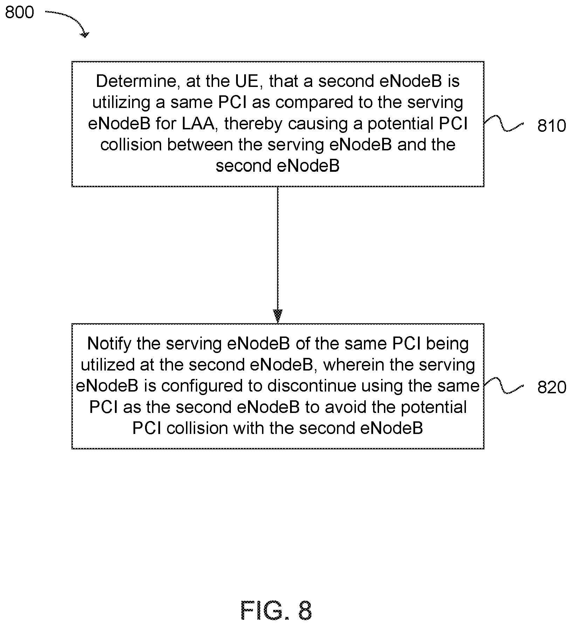

FIG. 8 provides functionality 800 of a user equipment (UE) operable to assist a serving eNodeB with physical cell identity (PCI) collision avoidance in Licensed-Assisted Access (LAA), as shown in the flow chart in FIG. 8. The UE can comprise one or more processors and memory configured to: determine, at the UE, that a second eNodeB is utilizing a same PCI as compared to the serving eNodeB for LAA, thereby causing a potential PCI collision between the serving eNodeB and the second eNodeB, as in block 810. The UE can comprise one or more processors and memory configured to: notify the serving eNodeB of the same PCI being utilized at the second eNodeB, wherein the serving eNodeB is configured to discontinue using the same PCI as the second eNodeB to avoid the potential PCI collision with the second eNodeB, as in block 820.

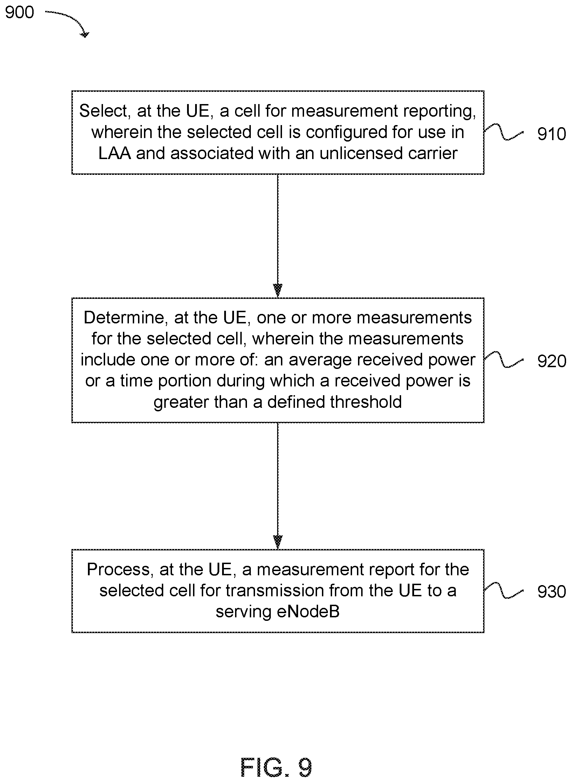

FIG. 9 provides functionality 900 of a user equipment (UE) operable to perform measurement reporting for selected cells used in Licensed-Assisted Access (LAA), as shown in the flow chart in FIG 9. The UE can comprise one or more processors and memory configured to: select, at the UE, a cell for measurement reporting, wherein the selected cell is configured for use in LAA and associated with an unlicensed carrier, as in block 910. The UE can comprise one or more processors and memory configured to: determine, at the UE, one or more measurements for the selected cell, wherein the measurements include one or more of: an average received power or a time portion during which a received power is greater than a defined threshold, as in block 920. The UE can comprise one or more processors and memory configured to: process, at the UE, a measurement report for the selected cell for transmission from the UE to a serving eNodeB, as in block 930.

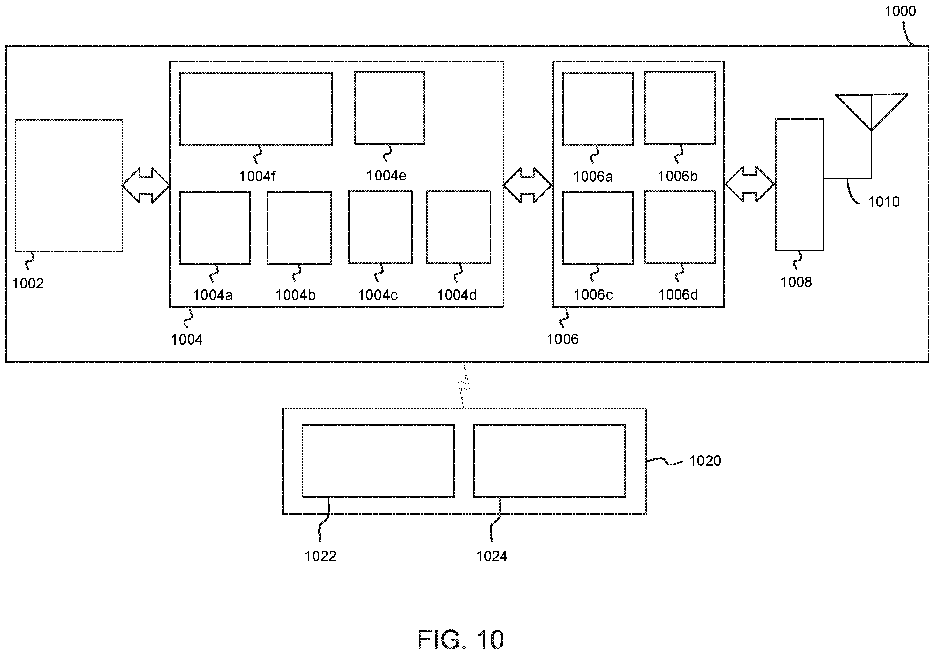

FIG. 10 provides an example illustration of a user equipment (UE) device 1000, such as a wireless device, a mobile station (MS), a mobile wireless device, a mobile communication device, a tablet, a handset, or other type of wireless device. The UE device 1000 can include one or more antennas configured to communicate with a node 1020 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 1020 can include one or more processors 1022 and memory 1024. The UE device 1000 can be configured to communicate using at least one wireless communication standard including 3GPP LTE, WiMAX, High Speed Packet Access (HSPA), Bluetooth, and WiFi. The UE device 1000 can communicate using separate antennas for each wireless communication standard or shared antennas for multiple wireless communication standards. The UE device 1000 can communicate in a wireless local area network (WLAN), a wireless personal area network (WPAN), and/or a WWAN.

In some embodiments, the UE device 1000 may include application circuitry 1002, baseband circuitry 1004, Radio Frequency (RF) circuitry 1006, front-end module (FEM) circuitry 1008 and one or more antennas 1010, coupled together at least as shown.

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 1004 may include circuitry such as, but not limited to, one or more single-core or multi-core processors. The baseband circuitry 1004 may include one or more baseband processors and/or control logic to process baseband signals received from a receive signal path of the RF circuitry 1006 and to generate baseband signals for a transmit signal path of the RF circuitry 1006. Baseband processing circuitry 1004 may interface with the application circuitry 1002 for generation and processing of the baseband signals and for controlling operations of the RF circuitry 1006. For example, in some embodiments, the baseband circuitry 1004 may include a second generation (2G) baseband processor 1004a, third generation (3G) baseband processor 1004b, fourth generation (4G) baseband processor 1004c, and/or other baseband processor(s) 1004d for other existing generations, generations in development or to be developed in the future (e.g., fifth generation (5G), 6G, etc.). The baseband circuitry 1004 (e.g., one or more of baseband processors 1004a-d) may handle various radio control functions that enable communication with one or more radio networks via the RF circuitry 1006. The radio control functions may include, but are not limited to, signal modulation/demodulation, encoding/decoding, radio frequency shifting, etc. In some embodiments, modulation/demodulation circuitry of the baseband circuitry 1004 may include Fast-Fourier Transform (FFT), precoding, and/or constellation mapping/demapping functionality. In some embodiments, encoding/decoding circuitry of the baseband circuitry 1004 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1004 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1004e of the baseband circuitry 1004 may be configured to run elements of the protocol stack for signaling of the PHY, MAC, RLC, PDCP and/or RRC layers. In some embodiments, the baseband circuitry may include one or more audio digital signal processor(s) (DSP) 1004f. The audio DSP(s) 1004f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1004 and the application circuitry 1002 may be implemented together such as, for example, on a system on a chip (SOC).

In some embodiments, the baseband circuitry 1004 may provide for communication compatible with one or more radio technologies. For example, in some embodiments, the baseband circuitry 1004 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1004 is configured to support radio communications of more than one wireless protocol may be referred to as multi-mode baseband circuitry.

The RF circuitry 1006 may enable communication with wireless networks using modulated electromagnetic radiation through a non-solid medium. In various embodiments, the RF circuitry 1006 may include switches, filters, amplifiers, etc. to facilitate the communication with the wireless network. RF circuitry 1006 may include a receive signal path which may include circuitry to down-convert RF signals received from the FEM circuitry 1008 and provide baseband signals to the baseband circuitry 1004. RF circuitry 1006 may also include a transmit signal path which may include circuitry to up-convert baseband signals provided by the baseband circuitry 1004 and provide RF output signals to the FEM circuitry 1008 for transmission.

In some embodiments, the RF circuitry 1006 may include a receive signal path and a transmit signal path. The receive signal path of the RF circuitry 1006 may include mixer circuitry 1006a, amplifier circuitry 1006b and filter circuitry 1006c. The transmit signal path of the RF circuitry 1006 may include filter circuitry 1006c and mixer circuitry 1006a. RF circuitry 1006 may also include synthesizer circuitry 1006d for synthesizing a frequency for use by the mixer circuitry 1006a of the receive signal path and the transmit signal path. In some embodiments, the mixer circuitry 1006a of the receive signal path may be configured to down-convert RF signals received from the FEM circuitry 1008 based on the synthesized frequency provided by synthesizer circuitry 1006d. The amplifier circuitry 1006b may be configured to amplify the down-converted signals and the filter circuitry 1006c may be a low-pass filter (LPF) or band-pass filter (BPF) configured to remove unwanted signals from the down-converted signals to generate output baseband signals. Output baseband signals may be provided to the baseband circuitry 1004 for further processing. In some embodiments, the output baseband signals may be zero-frequency baseband signals, although this is not a requirement. In some embodiments, mixer circuitry 1006a of the receive signal path may comprise passive mixers, although the scope of the embodiments is not limited in this respect.

In some embodiments, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by filter circuitry 1006c. The filter circuitry 1006c may include a low-pass filter (LPF), although the scope of the embodiments is not limited in this respect.

In some embodiments, the mixer circuitry 1006a of the receive signal path and the mixer circuitry 1006a of the transmit signal path may include two or more mixers and may be arranged for quadrature down-conversion and/or up-conversion respectively. In some embodiments, the mixer circuitry 1006a of the receive signal path and the mixer circuitry 1006a of the transmit signal path may include two or more mixers and may be arranged for image rejection (e.g., Hartley image rejection). In some embodiments, the mixer circuitry 1006a of the receive signal path and the mixer circuitry 1006a may be arranged for direct down-conversion and/or direct up-conversion, respectively. In some embodiments, the mixer circuitry 1006a of the receive signal path and the mixer circuitry 1006a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1006 may include analog-to-digital converter (ADC) and digital-to-analog converter (DAC) circuitry and the baseband circuitry 1004 may include a digital baseband interface to communicate with the RF circuitry 1006.

In some dual-mode embodiments, a separate radio IC circuitry may be provided for processing signals for each spectrum, although the scope of the embodiments is not limited in this respect.

In some embodiments, the synthesizer circuitry 1006d may be a fractional-N synthesizer or a fractional N/N+1 synthesizer, although the scope of the embodiments is not limited in this respect as other types of frequency synthesizers may be suitable. For example, synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some embodiments, the synthesizer circuitry 1006d may be a fractional N/N+1 synthesizer.

In some embodiments, frequency input may be provided by a voltage controlled oscillator (VCO), although that is not a requirement. Divider control input may be provided by either the baseband circuitry 1004 or the applications processor 1002 depending on the desired output frequency. In some embodiments, a divider control input (e.g., N) may be determined from a look-up table based on a channel indicated by the applications processor 1002.

Synthesizer circuitry 1006d of the RF circuitry 1006 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1006 may include an IQ/polar converter.

FEM circuitry 1008 may include a receive signal path which may include circuitry configured to operate on RF signals received from one or more antennas 1010, amplify the received signals and provide the amplified versions of the received signals to the RF circuitry 1006 for further processing. FEM circuitry 1008 may also include a transmit signal path which may include circuitry configured to amplify signals for transmission provided by the RF circuitry 1006 for transmission by one or more of the one or more antennas 1010.

In some embodiments, the FEM circuitry 1008 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by RF circuitry 1006), and one or more filters to generate RF signals for subsequent transmission (e.g., by one or more of the one or more antennas 1010.

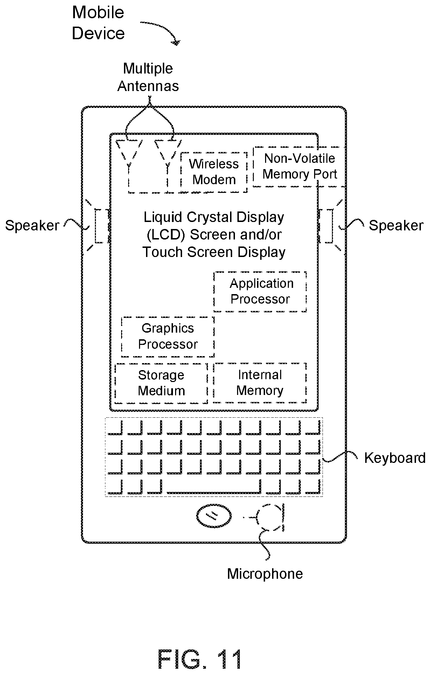

FIG 11 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3 GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 11 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. A non-transitory computer readable storage medium can be a computer readable storage medium that does not include signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

## Claims

1. An apparatus for use in a user equipment (110, 210, 310, 410, 510, 1000) operable to perform measurement reporting for selected cells used in Licensed-Assisted Access, LAA, **characterized by** the apparatus comprising one or more processors (1022) and memory (1024) configured to:
detect a plurality of cells including cells from different eNodeBs and/or PLMNs;
select a subset of cells from the plurality of cells for measurement reporting, wherein the subset of cells comprises cells for use in LAA being associated with unlicensed carriers, and the subset of cells is associated with a common serving eNodeB (220, 320, 420, 520) and/or a common PLMN; and
perform measurement reporting for the subset of cells, wherein measurement reports for the subset of cells are processed for transmission from the user equipment (110, 210, 310, 410, 510, 1000) to the common serving eNodeB (220, 320, 420, 520) associated with the subset of cells.

2. The apparatus of claim 1, further comprising an application processor (1002) configured to select the subset of cells from the plurality of cells for measurement reporting.

3. The apparatus of claim 1, further configured to:
select the subset of cells for measurement reporting based on a cell list received from the common serving eNodeB (220), wherein the cell list includes physical cell identities, PCIs, of cells associated with the common serving eNodeB (220); and
perform measurement reporting for the subset of cells selected based on the cell list received from the common serving eNodeB (220).

4. The apparatus of claim 1, further configured to:
process a synchronization signal or a reference signal received from the common serving eNodeB (220), wherein the synchronization signal or the reference signal includes a defined E-CGI or a defined PLMN ID associated with the common serving eNodeB (220); and
select the subset of cells from the plurality of cells for measurement reporting such that each of the cells in the subset is associated with a same E-CGI or a same PLMN ID as compared to the common serving eNodeB (220).

5. The apparatus of any of claims 1 to 4, further configured to:
select the subset of cells based on a synchronized cell detection, wherein the user equipment (110, 210, 310, 410, 510, 1000) is configured to receive a synchronization signal or a reference signal in a timing boundary that is synchronized with that of the common serving eNodeB (220), wherein timing boundaries of the subset of cells and the common serving eNodeB (220) are synchronized for carrier aggregation.

6. The apparatus of claim 1, wherein LAA involves carrier aggregation with a licensed carrier and one or more unlicensed carriers, wherein the licensed carrier serves as a primary cell and the one or more unlicensed carriers serve as secondary cells.

7. The apparatus of claim 1, wherein the measurement reports include, for each selected cell in the subset:
an average received power except LAA bursts from the common serving eNodeB;and
a time portion during which a received power is greater than a defined threshold.

8. A user equipment (110, 210, 310, 410, 510, 1000) comprising an apparatus according to one of claims 1 to 7.

9. A machine readable storage medium having instructions embodied thereon for performing measurement reporting for selected cells used in Licensed-Assisted Access, LAA, at a user equipment (110, 210, 310, 410, 510, 1000), **characterized in that** the instructions when executed by one or more processors at the user equipment (110, 210, 310, 410, 510, 1000) cause the user equipment (110, 210, 310, 410, 510, 1000) to perform the following:
detecting a plurality of cells including cells from different eNodeBs and/or PLMNs;
selecting a subset of cells from the plurality of cells for measurement reporting, wherein the subset of cells comprises cells for use in LAA being associated with unlicensed carriers, and the subset of cells is associated with a common serving eNodeB (220, 320, 420, 520) and/or a common PLMN; and
performing measurement reporting for the subset of cells in accordance with one or more triggering events.

10. The machine readable storage medium of claim 9, wherein the measurement reports include, for each selected cell in the subset:
an average received power except LAA bursts from the serving eNodeB; and
a time portion during which a received power is greater than a defined threshold.

11. The machine readable storage medium of any of claims 9 to 10, wherein the measurement reporting is performed in response to a triggering event that occurs when an average received power for a selected cell in a non-LAA burst is greater than a defined threshold, wherein the non-LAA burst indicates a time period during which an unlicensed carrier associated with the selected cell is idle or utilized by another radio access technology, operator or eNodeB.

12. The machine readable storage medium of any of claims 9 to 10, wherein the measurement reporting is performed in response to a triggering event that occurs when an average received power for a selected cell except an LAA burst is greater than a received power for the serving eNodeB.

13. The machine readable storage medium of any of claims 9 to 10, wherein the measurement reporting is performed in response to a triggering event that occurs when a portion of time associated with a selected cell is greater than a defined threshold, wherein the portion of time represents a time period for which a received power at the selected cell is greater than a defined threshold.

14. The machine readable storage medium of any of claims 9 to 10, wherein the measurement reporting is performed in response to a triggering event that occurs when a portion of time associated with a selected cell is greater than or less than a defined value by a defined threshold, wherein the portion of time represents a time period for which a received power at the selected cell is greater than a defined threshold.

15. The machine readable storage medium of claim 9, wherein LAA involves carrier aggregation with a licensed carrier and one or more unlicensed carriers, wherein the licensed carrier serves as a primary cell and the one or more unlicensed carriers serve as secondary cells.

## Patentansprüche

1. Vorrichtung zur Nutzung in einem Benutzerendgerät (110, 210, 310, 410, 510, 1000), das zum Durchführen von Measurement Reportings für ausgewählte Zellen, die gemäß Licensed-Assisted Access, LAA, genutzt werden, fungiert, **dadurch gekennzeichnet, dass** die Vorrichtung einen oder mehrere Prozessoren (1022) und ein Speicherelement (1024) umfasst, konfiguriert für Folgendes:
Erkennen einer Vielzahl von Zellen, die Zellen von unterschiedlichen eNodeBs und/oder PLMNs enthalten;
Auswählen einer Teilmenge von Zellen aus der Vielzahl von Zellen für ein Measurement Reporting, wobei die Teilmenge von Zellen Zellen zur Nutzung gemäß LAA, die mit unlizenzierten Carriern assoziiert sind, umfasst und die Teilmenge von Zellen mit einer gemeinsamen versorgenden eNodeB (220, 320, 420, 520) und/oder einem gemeinsamen PLMN assoziiert ist; und
Durchführen eines Measurement Reporting für die Teilmenge von Zellen, wobei Messdatenberichte für die Teilmenge von Zellen zur Übertragung vom Benutzerendgerät (110, 210, 310, 410, 510, 1000) an die gemeinsame, mit der Teilmenge von Zellen assoziierte versorgende eNodeB (220, 320, 420, 520) verarbeitet werden.

2. Vorrichtung nach Anspruch 1, die ferner einen Anwendungsprozessor (1002), der konfiguriert ist, um die Teilmenge von Zellen aus der Vielzahl von Zellen für ein Measurement Reporting auszuwählen, umfasst.

3. Vorrichtung nach Anspruch 1, die ferner für Folgendes konfiguriert ist:
Auswählen der Teilmenge von Zellen für ein Measurement Reporting basierend auf einer von der gemeinsamen versorgenden eNodeB (220) empfangenen Zellenliste, wobei die Zellenliste Physical Cell IDs, PCIs, von mit der gemeinsamen versorgenden eNodeB (220) assoziierten Zellen enthält; und
Durchführen eines Measurement Reporting für die Teilmenge von Zellen, die basierend auf der von der gemeinsamen versorgenden eNodeB (220) empfangenen Zellenliste ausgewählt wird.

4. Vorrichtung nach Anspruch 1, die ferner für Folgendes konfiguriert ist:
Verarbeiten eines Synchronisationssignals oder eines Referenzsignals, das von der gemeinsamen versorgenden eNodeB (220) empfangen wird, wobei das Synchronisationssignal oder das Referenzsignal eine definierte E-CGI oder eine definierte PLMN-ID, die mit der gemeinsamen versorgenden eNodeB (220) assoziiert ist, enthält; und
Auswählen der Teilmenge von Zellen aus der Vielzahl von Zellen für ein Measurement Reporting, sodass jede der Zellen in der Teilmenge mit einer selben E-CGI oder einer selben PLMN-ID im Vergleich zur gemeinsamen versorgenden eNodeB (220) assoziiert ist.

5. Vorrichtung nach einem der Ansprüche 1 bis 4, die ferner für Folgendes konfiguriert ist:
Auswählen der Teilmenge von Zellen basierend auf einer Erkennung synchronisierter Zellen, wobei das Benutzerendgerät (110, 210, 310, 410, 510, 1000) konfiguriert ist, um ein Synchronisationssignal oder ein Referenzsignal in einem zeitlichen Grenzbereich, der mit demjenigen der gemeinsamen versorgenden eNodeB (220) synchronisiert ist, zu empfangen, wobei die zeitlichen Grenzbereiche der Teilmenge von Zellen und der gemeinsamen versorgenden eNodeB (220) für eine Carrier Aggregation synchronisiert sind.

6. Vorrichtung nach Anspruch 1, wobei LAA eine Carrier Aggregation mit einem lizenzierten Carrier und einem oder mehreren unlizenzierten Carriern einschließt, wobei der lizenzierte Carrier als Primary Cell dient und der eine oder die mehreren unlizenzierten Carrier als Secondary Cells dienen.

7. Vorrichtung nach Anspruch 1, wobei die Messdatenberichte Folgendes für jede ausgewählte Zelle in der Teilmenge enthalten:
eine durchschnittliche Empfangsleistung mit Ausnahme von LAA-Bursts von der gemeinsamen versorgenden eNodeB; und
einen Zeitabschnitt, in dem eine Empfangsleistung größer als ein definierter Schwellenwert ist.

8. Benutzerendgerät (110, 210, 310, 410, 510, 1000), das eine Vorrichtung nach einem der Ansprüche 1 bis 7 umfasst.

9. Maschinenlesbares Speichermedium, in dem Befehle zum Durchführen von Measurement Reportings für ausgewählte Zellen, die gemäß Licensed-Assisted Access, LAA, an einem Benutzerendgerät (110, 210, 310, 410, 510, 1000) genutzt werden, ausgebildet sind, **dadurch gekennzeichnet, dass** die Befehle, wenn sie durch einen oder mehrere Prozessoren am Benutzerendgerät (110, 210, 310, 410, 510, 1000) ausgeführt werden, bewirken, dass das Benutzerendgerät (110, 210, 310, 410, 510, 1000) Folgendes durchführt:
Erkennen einer Vielzahl von Zellen, die Zellen von unterschiedlichen eNodeBs und/oder PLMNs enthalten;
Auswählen einer Teilmenge von Zellen aus der Vielzahl von Zellen für ein Measurement Reporting, wobei die Teilmenge von Zellen Zellen zur Nutzung gemäß LAA, die mit unlizenzierten Carriern assoziiert sind, umfasst und die Teilmenge von Zellen mit einer gemeinsamen versorgenden eNodeB (220, 320, 420, 520) und/oder einem gemeinsamen PLMN assoziiert ist; und
Durchführen eines Measurement Reporting für die Teilmenge von Zellen gemäß einem oder mehreren auslösenden Ereignissen.

10. Maschinenlesbares Speichermedium nach Anspruch 9, wobei die Messdatenberichte Folgendes für jede ausgewählte Zelle in der Teilmenge enthalten:
eine durchschnittliche Empfangsleistung mit Ausnahme von LAA-Bursts von der versorgenden eNodeB; und
einen Zeitabschnitt, in dem eine Empfangsleistung größer als ein definierter Schwellenwert ist.

11. Maschinenlesbares Speichermedium nach einem der Ansprüche 9 bis 10,
wobei das Measurement Reporting in Ansprechen auf ein auslösendes Ereignis, das eintritt, wenn eine durchschnittliche Empfangsleistung für eine ausgewählte Zelle in einem Nicht-LAA-Burst größer als ein definierter Schwellenwert ist, durchgeführt wird, wobei der Nicht-LAA-Burst einen Zeitraum, in dem ein unlizenzierter Carrier, der mit der ausgewählten Zelle assoziiert ist, frei ist oder durch eine andere Funkzugangstechnik, einen anderen Betreiber oder eine andere eNodeB beansprucht wird, angibt.

12. Maschinenlesbares Speichermedium nach einem der Ansprüche 9 bis 10, wobei das Measurement Reporting in Ansprechen auf ein auslösendes Ereignis, das eintritt, wenn eine durchschnittliche Empfangsleistung für eine ausgewählte Zelle mit Ausnahme eines LAA-Bursts größer als eine Empfangsleistung für die versorgende eNodeB ist, durchgeführt wird.

13. Maschinenlesbares Speichermedium nach einem der Ansprüche 9 bis 10, wobei das Measurement Reporting in Ansprechen auf ein auslösendes Ereignis, das eintritt, wenn ein mit einer ausgewählten Zelle assoziierter Zeitabschnitt größer als ein definierter Schwellenwert ist, durchgeführt wird, wobei der Zeitabschnitt einen Zeitraum, für den eine Empfangsleistung an der ausgewählten Zelle größer als ein definierter Schwellenwert ist, darstellt.

14. Maschinenlesbares Speichermedium nach einem der Ansprüche 9 bis 10, wobei das Measurement Reporting in Ansprechen auf ein auslösendes Ereignis, das eintritt, wenn ein mit einer ausgewählten Zelle assoziierter Zeitabschnitt größer oder kleiner als ein definierter Wert durch einen definierten Schwellenwert ist, durchgeführt wird, wobei der Zeitabschnitt einen Zeitraum, für den eine Empfangsleistung an der ausgewählten Zelle größer als ein definierter Schwellenwert ist, darstellt.

15. Maschinenlesbares Speichermedium nach Anspruch 9, wobei LAA eine Carrier Aggregation mit einem lizenzierten Carrier und einem oder mehreren unlizenzierten Carriern einschließt, wobei der lizenzierte Carrier als Primary Cell dient und der eine oder die mehreren unlizenzierten Carrier als Secondary Cells dienen.

## Revendications

1. Appareil destiné à être utilisé dans un équipement utilisateur (110, 210, 310, 410, 510, 1000) ayant pour fonction de mettre en oeuvre une génération de rapports de mesure pour des cellules sélectionnées utilisées en accès assisté sous licence, noté LAA, l'appareil étant **caractérisé en ce qu'**il comprend un ou plusieurs processeurs (1022) et une mémoire (1024) configurés pour :
détecter une pluralité de cellules comportant des cellules de différents eNodeB et/ou PLMN ;
sélectionner un sous-ensemble de cellules parmi la pluralité de cellules pour une génération de rapports de mesure, le sous-ensemble de cellules comprenant des cellules destinées à être utilisées en LAA associées à des porteuses sans licence, et le sous-ensemble de cellules étant associé à un eNodeB de desserte commun (220, 320, 420, 520) et/ou à un PLMN commun ; et
mettre en oeuvre une génération de rapports de mesure pour le sous-ensemble de cellules, des rapports de mesure pour le sous-ensemble de cellules étant traités en vue de leur transmission de l'équipement utilisateur (110, 210, 310, 410, 510, 1000) à l'eNodeB de desserte commun (220, 320, 420, 520) associé au sous-ensemble de cellules.

2. Appareil selon la revendication 1, comprenant en outre un processeur d'application (1002) configuré pour sélectionner le sous-ensemble de cellules parmi la pluralité de cellules pour une génération de rapports de mesure.

3. Appareil selon la revendication 1, configuré en outre pour :
sélectionner le sous-ensemble de cellules pour une génération de rapports de mesure sur la base d'une liste de cellules reçue depuis l'eNodeB de desserte commun (220), la liste de cellules comportant des identités de cellule physiques, notées PCI, de cellules associées à l'eNodeB de desserte commun (220) ; et
mettre en oeuvre une génération de rapports de mesure pour le sous-ensemble de cellules sélectionné sur la base de la liste de cellules reçue depuis l'eNodeB de desserte commun (220).

4. Appareil selon la revendication 1, configuré en outre pour :
traiter un signal de synchronisation ou un signal de référence reçu depuis l'eNodeB de desserte commun (220), le signal de synchronisation ou le signal de référence comportant un E-CGI défini ou une PLMN ID associé(e) à l'eNodeB de desserte commun (220) ; et
sélectionner le sous-ensemble de cellules parmi la pluralité de cellules pour une génération de rapports de telle sorte que chacune des cellules dans le sous-ensemble soit associée à un même E-CGI ou à une même PLMN ID par rapport à l'eNodeB de desserte commun (220) .

5. Appareil selon l'une quelconque des revendications 1 à 4, configuré en outre pour :
sélectionner le sous-ensemble de cellules sur la base d'une détection de cellule synchronisée, l'équipement utilisateur (110, 210, 310, 410, 510, 1000) étant configuré pour recevoir un signal de synchronisation ou un signal de référence dans une limite de cadencement qui est synchronisée avec celle de l'eNodeB de desserte commun (220), des limites de cadencement du sous-ensemble de cellules et de l'eNodeB de desserte commun (220) étant synchronisées pour une agrégation de porteuses.

6. Appareil selon la revendication 1, dans lequel le LAA fait appel à une agrégation de porteuses avec une porteuse sous licence et une ou plusieurs porteuses sans licence, la porteuse sous licence servant de cellule primaire et la ou les porteuses sans licence servant de cellules secondaires.

7. Appareil selon la revendication 1, dans lequel les rapports de mesure comportent, pour chaque cellule sélectionnée dans le sous-ensemble :
une puissance reçue moyenne en dehors de salves LAA depuis l'eNodeB de desserte commun ; et
un laps de temps durant lequel une puissance reçue est supérieure à un seuil défini.

8. Équipement utilisateur (110, 210, 310, 410, 510, 1000) comprenant un appareil selon l'une des revendications 1 à 7.

9. Support d'enregistrement lisible par machine incorporant des instructions pour mettre en oeuvre une génération de rapports de mesure pour des cellules sélectionnées utilisées en accès assisté sous licence, noté LAA, au niveau d'un équipement utilisateur (110, 210, 310, 410, 510, 1000), **caractérisé en ce que** les instructions, une fois exécutées par un ou plusieurs processeurs au niveau de l'équipement utilisateur (110, 210, 310, 410, 510, 1000), amènent l'équipement utilisateur (110, 210, 310, 410, 510, 1000) à mettre en oeuvre les opérations suivantes :
détection d'une pluralité de cellules comportant des cellules de différents eNodeB et/ou PLMN ;
sélection d'un sous-ensemble de cellules parmi la pluralité de cellules pour une génération de rapports de mesure, le sous-ensemble de cellules comprenant des cellules destinées à être utilisées en LAA associées à des porteuses sans licence, et le sous-ensemble de cellules étant associé à un eNodeB de desserte commun (220, 320, 420, 520) et/ou à un PLMN commun ; et
mise en oeuvre d'une génération de rapports de mesure pour le sous-ensemble de cellules conformément à un ou plusieurs événements déclencheurs.

10. Support d'enregistrement lisible par machine selon la revendication 9, dans lequel les rapports de mesure comportent, pour chaque cellule sélectionnée dans le sous-ensemble :
une puissance reçue moyenne en dehors de salves LAA depuis l'eNodeB de desserte ; et
un laps de temps durant lequel une puissance reçue est supérieure à un seuil défini.

11. Support d'enregistrement lisible par machine selon l'une quelconque des revendications 9 à 10, dans lequel la génération de rapports de mesure est mise en oeuvre en réponse à un événement déclencheur qui se produit lorsqu'une puissance reçue moyenne pour une cellule sélectionnée dans une salve hors LAA est supérieure à un seuil défini, la salve hors LAA indiquant une période de temps durant laquelle une porteuse sans licence associée à la cellule sélectionnée est inactive ou utilisée par une autre technologie d'accès radio, un autre opérateur ou un autre eNodeB.

12. Support d'enregistrement lisible par machine selon l'une quelconque des revendications 9 à 10, dans lequel la génération de rapports de mesure est mise en oeuvre en réponse à un événement déclencheur qui se produit lorsqu'une puissance reçue moyenne pour une cellule sélectionnée en dehors d'une salve LAA est supérieure à une puissance reçue pour l'eNodeB de desserte.

13. Support d'enregistrement lisible par machine selon l'une quelconque des revendications 9 à 10, dans lequel la génération de rapports de mesure est mise en oeuvre en réponse à un événement déclencheur qui se produit lorsqu'un laps de temps associé à une cellule sélectionnée est supérieur à un seuil défini, le laps de temps représentant une période de temps pour laquelle une puissance reçue au niveau de la cellule sélectionnée est supérieure à un seuil défini.

14. Support d'enregistrement lisible par machine selon l'une quelconque des revendications 9 à 10, dans lequel la génération de rapports de mesure est mise en oeuvre en réponse à un événement déclencheur qui se produit lorsqu'un laps de temps associé à une cellule sélectionnée est supérieur ou inférieur, d'un seuil défini, à une valeur définie, le laps de temps représentant une période de temps pour laquelle une puissance reçue au niveau de la cellule sélectionnée est supérieure à un seuil défini.

15. Support d'enregistrement lisible par machine selon la revendication 9, dans lequel le LAA fait appel à une agrégation de porteuses avec une porteuse sous licence et une ou plusieurs porteuses sans licence, la porteuse sous licence servant de cellule primaire et la ou les porteuses sans licence servant de cellules secondaires.
